# EUROPEAN PATENT SPECIFICATION

(11) **EP 3 738 926 B1**
(45) Date of publication and mention of the grant of the patent: **19.07.2023**
(21) Application number: 18926055.7
(22) Date of filing: 07.09.2018
(51) Int. Cl.: C01F 11/18, C09C 1/02

(54) **PREPARATION METHOD FOR NANOPRECIPITATED CALCIUM CARBONATE HAVING CORE-SHELL STRUCTURE**
VERFAHREN ZUR HERSTELLUNG VON NANOPRÄZIPITIERTEM CALCIUMCARBONAT MIT KERN-SCHALEN-STRUKTUR
PROCEDE DE PREPARATION DE CARBONATE DE CALCIUM NANOPRECIPITE AYANT UNE STRUCTURE NOYEAU-ENVELOPPE

(30) Priority: 12.07.2018 CN 201810765893
(43) Date of publication of application: 18.11.2020
(73) Proprietor: Guangxi Huana New Materials Co., Ltd., Nanning, Guangxi (CN)
(72) Inventor: ZHU, Yong, Nanning, Guangxi 530103 (CN); MO, Yinggui, Nanning, Guangxi 530103 (CN); LIANG, Ming, Nanning, Guangxi 530103 (CN); LIU, Songhao, Nanning, Guangxi 530103 (CN)
(74) Representative: Chung, Hoi Kan
(86) International application number: PCT/CN2018/104622
(87) International publication number: WO 2020/010689

(56) References cited:
- EP-A1- 2 524 898
- WO-A1-03/037795
- WO-A1-2005/061386
- CN-A- 1 377 921
- CN-A- 1 445 311
- CN-A- 1 944 541
- CN-A- 102 020 878
- CN-A- 108 101 094
- CN-B- 101 570 342
- US-A- 3 839 064

## Description

### TECHNICAL FIELD

The present invention belongs to the technical field of inorganic materials. The present invention relates to precipitated calcium carbonate, and in particular to a preparation method for nanoprecipitated calcium carbonate having a core-shell structure by using limestone as a raw material.

### BACKGROUND ART

Calcium carbonate is an important non-metallic inorganic mineral. Calcium carbonate raw ore generally refers to an ore with a high content of calcium carbonate, such as limestone, calcite, and marble. Industrial calcium carbonate is powder products with different morphologies and different particle sizes, which are prepared from limestone, calcite, marble and the like by physical or chemical methods. Products produced by precipitation and crystallization are called precipitated calcium carbonate, among which one having an average particle size of less than 100 nm is called nanoprecipitated calcium carbonate. Due to the advantages of low cost, high whiteness, controllable grain morphology and size, nanoprecipitated calcium carbonate is widely used as a filler for polymer composites such as sealants, coatings, and plastics. Applications in different fields have different requirements on the properties of nanoprecipitated calcium carbonate such as chemical composition, morphological characteristics, surface modification and whiteness (or brightness); for example, white/light color sealants, plastic products and the like require extremely high whiteness for nanoprecipitated calcium carbonate fillers. Whiteness is an important index to evaluate the quality of nanoprecipitated calcium carbonate.

At present, nanoprecipitated calcium carbonate is generally produced by carbonation with limestone as a raw material. In general, the quality of limestone directly influences the whiteness of products. Low-grade limestone has a high content of impurities such as iron, manganese, and hydrochloric acid insolubles, which greatly influences the hue of a nanoprecipitated calcium carbonate product. Among mineral resources of limestone, there are not many high-quality limestones, and most limestones are of low grade with a high content of impurities. In the production of precipitated calcium carbonate, most impurities, such as iron and manganese in the form of ions or oxides in limestone, remain in the final products and influence the whiteness of calcium carbonate, and thus influence the hue of filled products. Therefore, many low-grade limestone ores with high impurity content are discarded or sold at low price as building materials, resulting in waste of resources.

In order to make full use of limestone and realize high-value utilization of low-grade limestone, many scholars have studied how to use low-grade limestone ore with high content of impurity to prepare a high-quality nano calcium carbonate which shows an improvement in the whiteness and application effects. At present, commonly used methods include lime sorting and chemical whitening. Lime sorting refers to grading and screening lime obtained by calcining low-grade limestone to sort out high-quality lime for production. Chemical whitening is as follows: strong oxidants such as sodium hypochlorite, hydrogen peroxide, sodium dithionite, calcium sulfite, and sodium thiosulfate are added during the production of calcium carbonate to oxidize non-ferrous metal ions and water-insoluble oxides thereof into water-soluble low-valence compounds, and the low-valence compounds are then removed by filtering and dehydration, thereby achieving the purpose of whitening. The strong oxidants are added during lime slaking, during or after carbonation. In addition, chemical whitening may also employ complexes to remove or mask colored ions.

In production, the commonly-used methods for improving the whiteness of precipitated calcium carbonate mainly include screening lime, bleaching lime slurry or precipitated calcium carbonate product and physical removal of the impurity. However, there are great limitations in the above methods for whitening of calcium carbonate. For the method of sorting lime obtained by calcining limestone, the quality of lime is difficult to be judged in a quantified manner, so that automatic sorting cannot be performed, resulting in low operability or high labor cost in production. In the case of chemical whitening, due to the difference in pH ranges suitable for different bleaching agents, if the pH value of calcium carbonate is adjusted to maintain the strong acid condition for it to carry out reduction reaction for bleaching, the basic properties of calcium carbonate may be changed.

The essence of chemical whitening of a low-whiteness nanoprecipitated calcium carbonate finished product is to bleach calcium carbonate on the surface, and the effect is remarkable. Similarly, coating the surface of low-whiteness nanoprecipitated calcium carbonate with a layer of high-whiteness substance may also plays a role in improving the whiteness, so that the product obtained is nanoprecipitated calcium carbonate with a core-shell structure. Due to the unique structural characteristics of nanomaterials having a core-shell structure, the nanomaterials are endowed with new characteristics that many core/shell single-component materials do not have. A core-shell structure is composed of a central particle (core) and a coating layer, wherein the core and the shell are connected through a physical or chemical action, and the core and shell parts may be composed of various materials, including macromolecules, inorganic substances, metals and the like. Depending on various core-shell compositions, materials having a core-shell structure are mainly classified into an organic/inorganic type, an inorganic/organic type and an inorganic/inorganic type. At present, precipitated calcium carbonate having a core-shell structure is mostly inorganic/organic, and is obtained by coating calcium carbonate with an organic polymer. Simply, precipitated calcium carbonate having an inorganic/organic core-shell structure refers to precipitated calcium carbonate which is coated with a layer of organics after surface treatment, thereby achieving the effects of improving the dispersibility of precipitated calcium carbonate as well as the processability and application performance of the products. Calcium carbonate having an organic/inorganic core-shell structure refers to a composite particle obtained by coating an organic core with a layer of precipitated calcium carbonate. At present, most calcium carbonate with an inorganic/inorganic core-shell structure is obtained by coating precipitated calcium carbonate with silica or titanium dioxide. In addition, there are other techniques for coating precipitated calcium carbonate with inorganic materials.

The information disclosed in this Background section is merely intended to increase an understanding of the general background of the invention and should not be taken as an admission or any suggestion that such information constitutes prior art known to those of ordinary skill in the art.

EP 2 524 898 discloses a process that combines a low-purity divalent metal ion carbonate material (e.g. calcium carbonate) and a corresponding high-purity raw material to prepare a core-shell product.

### SUMMARY OF THE INVENTION

An object of the present invention is to provide a preparation method for nanoprecipitated calcium carbonate having a core-shell structure, in which low-whiteness nano calcium carbonate is used as a core, and the core is coated with a layer of high-whiteness shell of precipitated calcium carbonate, thereby improving the whiteness of precipitated calcium carbonate prepared from low-grade ore.

In order to achieve the above object, the present invention provides a preparation method for nanoprecipitated calcium carbonate having a core-shell structure, comprising the following steps:
(1) preparation of core-nanoprecipitated calcium carbonate
   raw material for the core: calcining low-grade limestone to obtain quick lime, slaking the quick lime and removing slag to obtain a first lime slurry, adjusting the solid content of the first lime slurry, wherein the low-grade limestone comprises 95.37wt.% of CaCO₃, 3.5845 wt.% of MgCO₃, 0.0957 wt.% of Fe₂O₃, and 0.0079 wt.% of MnO₂ and, optionally, standing it for subsequent use; and
   carbonation of core-nanoprecipitated calcium carbonate: feeding the first lime slurry into a carbonation tower for carbonation reaction to obtain a suspension of core-nanoprecipitated calcium carbonate, wherein the carbonation of core-nanoprecipitated calcium carbonate in step (1) comprises the following steps: feeding the first lime slurry into a carbonation tower, starting stirring in the carbonation tower, controlling the initial temperature of carbonation to be 18-25 °C, introducing mixed gas with the concentration of carbon dioxide of 20-50 vol% at a flow rate of 50-100 L/min for carbonation reaction, proceeding the reaction until the system conductivity reached 0.1-0.3 mS/cm, and stopping the introduction of the gas to terminate the carbonation reaction to obtain the suspension of core-nanoprecipitated calcium carbonate;
(2) coating of a shell
   raw material for the shell: calcining high-grade limestone to obtain quick lime, slaking the quick lime and removing slag to obtain a second lime slurry, and adjusting the solid content of the second lime slurry, wherein the high-grade limestone comprises 99.46 wt.% of CaCO₃, 0.4921 wt.% of MgCO₃, 0.0062 wt.% of Fe₂O₃, and 0.0033 wt.% of MnO₂;
   coating of the shell: mixing the suspension of core-nanoprecipitated calcium carbonate prepared in step (1) with 10-30 wt.% of the second lime slurry, and preparing a suspension of nanoprecipitated calcium carbonate having a core-shell structure by carbonation or aging, wherein preparing a suspension of nanoprecipitated calcium carbonate having a core-shell structure by carbonation comprises the following steps: stirring the suspension of core-nanoprecipitated calcium carbonate in the carbonation tower at a stirring rate of 800-1200 r/min, and introducing mixed gas with the concentration of carbon dioxide of 20-50 vol% at a flow rate of 20-40 L/min; concurrently, slowly adding 10-30 wt.% of the second lime slurry into the suspension of core-nanoprecipitated calcium carbonate, controlling the system conductivity to be 1.0-2.0 mS/cm during the adding, and after the adding is finished, stopping the introduction of the gas to terminate the carbonation reaction when the system conductivity drops to 0.1-0.3 mS/cm, thereby obtaining the suspension of nanoprecipitated calcium carbonate having a core-shell structure;
   and wherein preparing a suspension of nanoprecipitated calcium carbonate having a core-shell structure by aging comprises the following steps: adding 10-30 wt.% of the second lime slurry into the suspension of core-nanoprecipitated calcium carbonate, further adding sodium carbonate or sodium bicarbonate, stirring uniformly, aging the system at a temperature of 40-80°C for 12-24 hours to obtain the suspension of nanoprecipitated calcium carbonate having a core-shell structure, wherein the molar ratio of the second lime slurry to the sodium carbonate or the sodium bicarbonate is 1:1-5; and
(3) post-treatment: subjecting the suspension obtained in step (2) to surface treatment, dehydration, drying and crushing to obtain nanoprecipitated calcium carbonate having a core-shell structure.

Preferably, in the above technical solution, both the first lime slurry and the second lime slurry have a solid content of 10-20%.

Preferably, in the above technical solution, the mixed gas is a mixed gas of carbon dioxide and air.

Compared with the prior art, the present invention has the following beneficial effects:
(1) In the preparation method for nanoprecipitated calcium carbonate having a core-shell structure according to the present invention, low-whiteness nano calcium carbonate, which is prepared by calcining, slaking and carbonating low-grade ore (with a high content of impurities such as iron and manganese), is used as the core. High-grade ore (with a low content of impurities such as iron and manganese) is used as the raw material for the shell, and the core is coated with a layer of high-whiteness precipitated calcium carbonate as the shell by calcining, slaking and carbonating the raw material, so that the whiteness of precipitated calcium carbonate prepared from low-grade ore is improved, and the production cost is also reduced.
(2) The preparation method according to the invention controls the formation of the "core" and the "shell" in separated steps, so that the formation of the shell is not influenced by the core; in the coating of the shell, the shell has a mass content of 10-30%, and is controlled at a certain thickness, so as to ensure the uniform coating of the shell and the morphology of precipitated calcium carbonate to be controllable. Among others, carbonation products of nanoprecipitated calcium carbonate generally have a cube-like morphology; moreover, the cube-like morphology of nanoprecipitated calcium carbonate having a core-shell structure could be ensured by controlling the coating of the shell.

### BRIEFT DESCRIPTION OF THE DRAWINGS

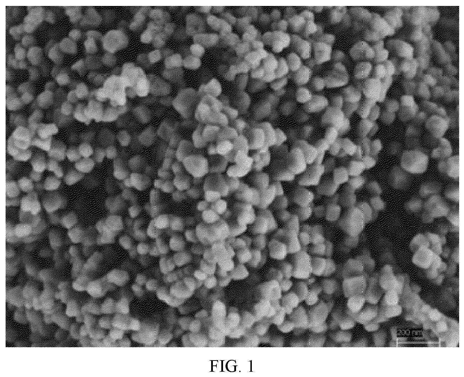

FIG. 1 is a SEM photograph of nanoprecipitated calcium carbonate having a core-shell structure prepared according to the preparation method for nanoprecipitated calcium carbonate having a core-shell structure of Example 1 of the present invention.

### DETAILED DESCRIPTION OF THE EMBODIMENTS

Specific embodiments of the present invention will be described in detail with reference to the accompanying drawings, but it should be understood that the scope of the present invention is not limited to the specific embodiments.

In the context of the specification and claims, it will be understood that the term "comprise", or its variations such as "comprises" or "comprising" means the inclusion of stated elements or components but not the exclusion of other elements or components unless the context clearly dictates otherwise.

The composition of limestone ore used in the examples of the present invention was determined by atomic absorption spectroscopy, as shown in Table 1.

**Table 1**

| Ore type | CaCO₃/wt.% | MgCO₃/wt.% | Fe₂O₃/wt.% | MnO₂/wt.% | Grading |
|---|---|---|---|---|---|
| Limestone A | 95.37 | 3.5845 | 0.0957 | 0.0079 | Low-grade ore |
| Limestone B | 99.46 | 0.4921 | 0.0062 | 0.0033 | High-grade ore |

### Example 1

A preparation method for nanoprecipitated calcium carbonate having a core-shell structure, comprising the following steps:

### (1) Preparation of core-nanoprecipitated calcium carbonate

Limestone A was calcined to obtain quick lime, and the quick lime was slaked and removed slag to obtain lime slurry A. The lime slurry A was adjusted to have a solid content of 15% and was then stood for subsequent use. 20 kg of the lime slurry A with the solid content of 15% was fed into a carbonation tower, and was then stirred. The initial reaction temperature was controlled to be 20°C. Mixed gas with the concentration of carbon dioxide of 40 vol% was introduced at a flow rate of 50 L/min for carbonation reaction. The reaction was proceeded until the system conductivity reached 0.2 mS/cm, and then the introduction of the gas was stopped to terminate the carbonation reaction to obtain a suspension of core-nanoprecipitated calcium carbonate.

### (2) Coating of a shell

Limestone B was calcined to obtain quick lime, and the quick lime was slaked and removed slag to obtain lime slurry B. The lime slurry B was adjusted to have a solid content of 15% and was then stood for subsequent use. Stirring in the carbonation tower was restarted at a stirring rate of 800 r/min. Mixed gas with the concentration of carbon dioxide of 50 vol% was introduced at a flow rate of 40 L/min; concurrently, 10 wt.% of the lime slurry B was slowly added into the suspension of core-nanoprecipitated calcium carbonate, and the system conductivity was controlled to be 1.0 mS/cm during the adding. After the adding was finished, the introduction of the gas was stopped to terminate the carbonation reaction when the system conductivity dropped to 0.3 mS/cm, thereby obtaining a suspension of nanoprecipitated calcium carbonate having a core-shell structure. The suspension was then subjected to surface treatment, dehydration, drying and crushing to obtain a nanoprecipitated calcium carbonate having a core-shell structure. A SEM photograph of nanoprecipitated calcium carbonate having a core-shell structure prepared in this example is shown in FIG. 1.

### Example 2

A preparation method for nanoprecipitated calcium carbonate having a core-shell structure, comprising the following steps:

### (1) Preparation of core-nanoprecipitated calcium carbonate

Limestone A was calcined to obtain quick lime, and the quick lime was slaked and removed slag to obtain lime slurry A. The lime slurry A was adjusted to have a solid content of 20% and was then stood for subsequent use. 20 kg of the lime slurry A with a solid content of 20 % was fed into a carbonation tower, and was then stirred. The initial reaction temperature was controlled to be 18°C. Mixed gas with the concentration of carbon dioxide of 50 vol% was introduced at a flow rate of 100 L/min for carbonation reaction. The reaction was proceeded until the system conductivity reach 0.1 mS/cm, and then the introduction of the gas was stopped to terminate the carbonation reaction to obtain a suspension of core-nanoprecipitated calcium carbonate.

### (2) Coating of a shell

Limestone B was calcined to obtain quick lime, and the quick lime was slaked and removed slag to obtain lime slurry B. The lime slurry B was adjusted to have a solid content of 20% and was then stood for subsequent use. Based on the solid content of the obtained suspension of core-nanoprecipitated calcium carbonate, 15 wt.% of the lime slurry B was added. Sodium bicarbonate was further added. The system was stirred uniformly, and aged at a temperature of 75°C for 20 h to obtain a suspension of nanoprecipitated calcium carbonate having a core-shell structure. The suspension was then subjected to surface treatment, dehydration, drying and crushing to obtain a nanoprecipitated calcium carbonate having a core-shell structure. The molar ratio of the lime slurry B to the sodium bicarbonate herein was 1:1.

### Example 3

A preparation method for nanoprecipitated calcium carbonate having a core-shell structure, comprising the following steps:

### (1) Preparation of core-nanoprecipitated calcium carbonate

Limestone A was calcined to obtain quick lime, and the quick lime was slaked and removed slag to obtain lime slurry A. The lime slurry A was adjusted to have a solid content of 10% and was then stood for subsequent use. 20 kg of the lime slurry A with a solid content of 10% was fed into a carbonation tower, and was then stirred. The initial reaction temperature of carbonation was controlled to be 25°C. Mixed gas with the concentration of carbon dioxide of 20 vol% was introduced at a flow rate of 100 L/min for carbonation reaction. The reaction was proceeded until the system conductivity reached 0.3 mS/cm, and then the introduction of the gas was stopped to terminate the carbonation reaction to obtain a suspension of core-nanoprecipitated calcium carbonate.

### (2) Coating of a shell

Limestone B was calcined to obtain quick lime, and the quick lime was slaked and removed slag to obtain lime slurry B. The lime slurry B was adjusted to have a solid content of 10% and was then stood for subsequent use. Stirring in the carbonation tower was restarted at a stirring rate of 1200 r/min. Mixed gas with the concentration of carbon dioxide of 25 vol% was introduced at a flow rate of 40 L/min; concurrently, 30 wt.% of the lime slurry B was slowly added into the suspension of core-nanoprecipitated calcium carbonate, and the system conductivity was controlled to be 2.0 mS/cm during the adding. After the adding was finished, the introduction of the gas was stopped to terminate the carbonation reaction when the system conductivity dropped to 0.2 mS/cm, thereby obtaining a suspension of nanoprecipitated calcium carbonate having a core-shell structure. The suspension was then subjected to surface treatment, dehydration, drying and crushing to obtain nanoprecipitated calcium carbonate having the core-shell structure.

### Comparative Example 1

Limestone A was calcined to obtain quick lime, and the quick lime was slaked and removed slag to obtain lime slurry A. The lime slurry A was adjusted to have a solid content of 12% and was then stood for subsequent use. 20 kg of the lime slurry A with a solid content of 12% was fed into a carbonation tower, and was then stirred. The initial reaction temperature was controlled to be 23°C. Mixed gas with the concentration of carbon dioxide of 20 vol% was introduced at a flow rate of 70 L/min for carbonation reaction. The reaction was proceeded until a conductivity reached 0.2 mS/cm, and then the introduction of the gas was stopped to terminate the carbonation reaction to obtain a suspension of core-nanoprecipitated calcium carbonate. The suspension was subjected to surface treatment, dehydration, drying and crushing to obtain nanoprecipitated calcium carbonate.

### Comparative Example 2

A preparation method for nanoprecipitated calcium carbonate having a core-shell structure, comprising the following steps:

### (1) Preparation of core-nanoprecipitated calcium carbonate

Limestone A was calcined to obtain quick lime, and the quick lime was slaked and removed slag to obtain lime slurry A₁. The lime slurry A₁ was adjusted to have a solid content of 15% and was then stood for subsequent use. 20 kg of the lime slurry A₁ with a solid content of 15% was fed into a carbonation tower, and was then stirred. The initial reaction temperature was controlled to be 21°C. Mixed gas with a concentration of carbon dioxide of 33 vol% was introduced at a flow rate of 50 L/min for carbonation reaction. The reaction was proceeded until the system conductivity reached 0.2 mS/cm, and then the introduction of the gas was stopped to terminate the carbonation reaction to obtain a suspension of core-nanoprecipitated calcium carbonate.

### (2) Coating of a shell

Limestone A was calcined to obtain quick lime, and the quick lime was slaked and removed slag to obtain lime slurry A₂. The lime slurry A₂ was adjusted to have a solid content of 15% and was then stood for subsequent use. Stirring in the carbonation tower was restarted at a stirring rate of 800 r/min. Mixed gas with the concentration of carbon dioxide of 50 vol% was introduced at a flow rate of 20 L/min; concurrently, 10 wt.% of the lime slurry A₂ was slowly added into the suspension of core-nanoprecipitated calcium carbonate, and the system conductivity was controlled to be 1.0 mS/cm during the adding. After the adding was finished, the introduction of the gas was stopped to terminate the carbonation reaction when the system conductivity dropped to 0.3 mS/cm, thereby obtaining a suspension of nanoprecipitated calcium carbonate having a core-shell structure. The suspension was subjected to surface treatment, dehydration, drying and crushing to obtain nanoprecipitated calcium carbonate having the core-shell structure.

### Comparative Example 3

A preparation method for nanoprecipitated calcium carbonate having a core-shell structure, comprising the following steps:

### (1) Preparation of core-nanoprecipitated calcium carbonate

Limestone A was calcined to obtain quick lime, and the quick lime was slaked and removed slag to obtain lime slurry A₁. The lime slurry A₁ was adjusted to have a solid content of 20% and was then stood for subsequent use. 20 kg of the lime slurry A₁ with a solid content of 20% was fed into a carbonation tower, and was then stirred. The initial reaction temperature of carbonation was controlled to be 18°C. Mixed gas with a concentration of carbon dioxide of 50 vol% was introduced at a flow rate of 100 L/min for carbonation reaction. The reaction was proceeded until the system conductivity reached 0.2 mS/cm, and then the introduction of the gas was stopped to terminate the carbonation reaction to obtain a suspension of core-nanoprecipitated calcium carbonate.

### Coating of a shell

Limestone A was calcined to obtain quick lime, and the quick lime was slaked and removed slag to obtain lime slurry A₂. The lime slurry A₂ was adjusted to have a solid content of 20% and was then stood for subsequent use. Based on the solid content of the obtained suspension of core-nanoprecipitated calcium carbonate, 15 wt.% of the lime slurry A₂ was added. Sodium bicarbonate was further added. The system was stirred uniformly, and aged at a temperature of 60°C for 20 h to obtain a suspension of nanoprecipitated calcium carbonate having a core-shell structure. The suspension was subjected to surface treatment, dehydration, drying and crushing to obtain nanoprecipitated calcium carbonate having a core-shell structure. The molar ratio of the lime slurry A₂ to the sodium bicarbonate herein was 1:2.

### Comparative Example 4

Limestone B was calcined to obtain quick lime, and the quick lime was slaked and removed slag to obtain lime slurry B₁. The lime slurry Bi was adjusted to have a solid content of 12% and was then stood for subsequent use. 20 kg of the lime slurry Bi with a solid content of 12% was fed into a carbonation tower, and was then stirred. The initial reaction temperature was controlled to be 23°C. Mixed gas with the concentration of carbon dioxide of 25 vol% was introduced at a flow rate of 75 L/min for carbonation reaction. The reaction was proceeded until the system conductivity reached 0.3 mS/cm, and then the introduction of the gas was stopped to terminate the carbonation reaction to obtain a suspension of core-nanoprecipitated calcium carbonate. The suspension was then subjected to surface treatment, dehydration, drying and crushing to obtain nanoprecipitated calcium carbonate.

### Comparative Example 5

A preparation method for nanoprecipitated calcium carbonate having a core-shell structure, comprising the following steps:

### (1) Preparation of core-nanoprecipitated calcium carbonate

Limestone B was calcined to obtain quick lime, and the quick lime was slaked and removed slag to obtain lime slurry B₁. The lime slurry Bi was adjusted to have a solid content of 10% and was then stood for subsequent use. 20 kg of the lime slurry Bi with a solid content of 10% was fed into a carbonation tower, and was then stirred. The initial reaction temperature of carbonation was controlled to be 23°C. Mixed gas with a concentration of carbon dioxide of 33 vol% was introduced at a flow rate of 60 L/min for carbonation reaction. The reaction was proceeded until the system conductivity reached 0.3 mS/cm, and then the introduction of the gas was stopped to terminate the carbonation reaction to obtain a suspension of core-nanoprecipitated calcium carbonate.

### Coating of a shell

Limestone B was calcined to obtain quick lime, and the quick lime was slaked and removed slag to obtain lime slurry B₂. The lime slurry B₂ was adjusted to have a solid content of 10 % and was then stood for subsequent use. Stirring in the carbonation tower was restarted at a stirring rate of 1000 r/min. Mixed gas with a concentration of carbon dioxide of 50 vol% was introduced at a flow rate of 20 L/min; concurrently, 15 wt.% of the lime slurry A₂ was slowly added into the suspension of core-nanoprecipitated calcium carbonate, and the system conductivity was controlled to be 1.0 mS/cm during the adding. After the adding was finished, the introduction of the gas was stopped to terminate the carbonation reaction when the system conductivity dropped to 0.1 mS/cm, thereby obtaining a suspension of nanoprecipitated calcium carbonate having a core-shell structure. The suspension was subjected to surface treatment, dehydration, drying and crushing to obtain nanoprecipitated calcium carbonate having a core-shell structure.

### Comparative Example 6

Limestone A was calcined to obtain quick lime, and the quick lime was slaked and removed slag to obtain lime slurry A. The lime slurry A was adjusted to have a solid content of 12% and was then stood for subsequent use. 20 kg of the lime slurry A with a solid content of 12% was fed into a carbonation tower, and was then stirred. The initial reaction temperature of carbonation was controlled to be 20°C. Mixed gas with the concentration of carbon dioxide of 30 vol% was introduced at a flow rate of 70 L/min for carbonation reaction. The reaction was proceeded until the system conductivity reached 0.1 mS/cm, and then the introduction of the gas was stopped to terminate the carbonation reaction to obtain a suspension of core-nanoprecipitated calcium carbonate.

Limestone B was calcined to obtain a quick lime, and the quick lime was slaked and removed slag to obtain lime slurry B. The lime slurry B was adjusted to have a solid content of 12% and was then stood for subsequent use. 20 kg of the lime slurry B with a solid content of 12% was fed into a carbonation tower, and stirring in the carbonation tower was started. The initial temperature of carbonation was controlled to be 20°C. Mixed gas with the concentration of carbon dioxide of 30 vol% was introduced at a flow rate of 75 L/min for carbonation reaction. The reaction was proceeded until the system conductivity reached 0.2 mS/cm, and then the introduction of the gas was stopped to terminate the carbonation reaction to obtain a suspension of core-nanoprecipitated calcium carbonate.

The suspension of nanoprecipitated calcium carbonate obtained by carbonation of the raw slurry of the limestone B was mixed with that obtained by carbonation of the raw slurry of the limestone A in a mass ratio of 1:3. The resulting mixture was stirred uniformly, and was then subjected to surface treatment, dehydration, drying and crushing to obtain a nanoprecipitated calcium carbonate powder.

Characterization and application results of calcium carbonate prepared in inventive examples and comparative examples were compared. The comparison results are shown in Table 2.

**Table 2 Comparison of characterization and application results of calcium carbonate prepared in inventive examples and comparative examples**

| | Whiteness of calcium carbonate powder | Chromatic aberration of calcium carbonate power | | | Hue of soft PVC |
|---|---|---|---|---|---|
| | | L* | a* | b* | |
| Example 1 | 94.12 | 98.12 | -0.11 | 2.01 | +++ |
| Example 2 | 94.39 | 98.32 | -0.15 | 1.98 | +++ |
| Example 3 | 95.09 | 98.36 | -0.10 | 1.89 | ++++ |
| Comparative Example 1 | 92.31 | 98.15 | -0.17 | 1.90 | + |
| Comparative Example 2 | 92.29 | 98.19 | -0.12 | 2.01 | + |
| Comparative Example 3 | 92.43 | 98.42 | -0.15 | 1.71 | + |
| Comparative Example 4 | 96.04 | 98.23 | -0.09 | 1.64 | +++++ |
| Comparative Example 5 | 95.89 | 98.51 | -0.17 | 1.86 | +++++ |
| Comparative Example 6 | 94.32 | 98.69 | -0.13 | 1.60 | ++ |

As shown in Table 2, nanocalcium carbonate having a core-shell structure prepared by the method of the present invention is significantly improved in terms of hue in soft PVC applications.

The above description of specific exemplary embodiments of the invention is for the purpose of illustration and exemplification. These descriptions are not intended to limit the invention to the precise forms disclosed, and obviously, many modifications and variations can be made in light of the above teachings. The exemplary embodiments were chosen and described in order to explain the principles of the invention and its practical application, so that those skilled in the art could implement and use the various exemplary embodiments and various alternatives and modifications in the invention. The scope of the invention is intended to be defined by the claims.

## Claims

1. A preparation method for nanoprecipitated calcium carbonate having a core-shell structure, **characterized by** comprising the following steps:
(1) preparation of core-nanoprecipitated calcium carbonate
raw material for the core: calcining low-grade limestone to obtain quick lime, slaking the quick lime and removing slag to obtain a first lime slurry, and adjusting the solid content of the first lime slurry, wherein the low-grade limestone comprises 95.37wt.% of CaCO₃, 3.5845 wt.% of MgCO₃, 0.0957 wt.% of Fe₂O₃, and 0.0079 wt.% of MnO₂; and
carbonation of core-nanoprecipitated calcium carbonate: feeding the first lime slurry into a carbonation tower for carbonation reaction to obtain a suspension of core-nanoprecipitated calcium carbonate, wherein the carbonation of core-nanoprecipitated calcium carbonate in step (1) comprises the following steps: feeding the first lime slurry into a carbonation tower, starting stirring in the carbonation tower, controlling the initial temperature of carbonation to be 18-25 °C, introducing mixed gas with the concentration of carbon dioxide of 20-50 vol% at a flow rate of 50-100 L/min for carbonation reaction, proceeding the reaction until the system conductivity reached 0.1-0.3 mS/cm, and stopping the introduction of the gas to terminate the carbonation reaction to obtain the suspension of core-nanoprecipitated calcium carbonate;
(2) coating of a shell
raw material for the shell: calcining high-grade limestone to obtain quick lime, slaking the quick lime and removing slag to obtain a second lime slurry, and adjusting the solid content of the second lime slurry, wherein the high-grade limestone comprises 99.46 wt.% of CaCO₃, 0.4921 wt.% of MgCO₃, 0.0062 wt.% of Fe₂O₃, and 0.0033 wt.% of MnO₂;
coating of the shell: mixing the suspension of core-nanoprecipitated calcium carbonate prepared in step (1) with 10-30 wt.% of the second lime slurry, and preparing a suspension of nanoprecipitated calcium carbonate having a core-shell structure by carbonation or aging, wherein preparing a suspension of nanoprecipitated calcium carbonate having a core-shell structure by carbonation comprises the following steps: stirring the suspension of core-nanoprecipitated calcium carbonate in the carbonation tower at a stirring rate of 800-1200 r/min, and introducing mixed gas with the concentration of carbon dioxide of 20-50 vol% at a flow rate of 20-40 L/min; concurrently, slowly adding 10-30 wt.% of the second lime slurry into the suspension of core-nanoprecipitated calcium carbonate, controlling the system conductivity to be 1.0-2.0 mS/cm during the adding, and after the adding is finished, stopping the introduction of the gas to terminate the carbonation reaction when the system conductivity drops to 0.1-0.3 mS/cm, thereby obtaining the suspension of nanoprecipitated calcium carbonate having a core-shell structure;
and wherein preparing a suspension of nanoprecipitated calcium carbonate having a core-shell structure by aging comprises the following steps: adding 10-30 wt.% of the second lime slurry into the suspension of core-nanoprecipitated calcium carbonate, further adding sodium carbonate or sodium bicarbonate, stirring uniformly, aging the system at a temperature of 40-80°C for 12-24 hours to obtain the suspension of nanoprecipitated calcium carbonate having a core-shell structure, wherein the molar ratio of the second lime slurry to the sodium carbonate or the sodium bicarbonate is 1:1-5; and
(3) post-treatment: subjecting the suspension obtained in step (2) to surface treatment, dehydration, drying and crushing to obtain nanoprecipitated calcium carbonate having a core-shell structure.

2. The preparation method for nanoprecipitated calcium carbonate having a core-shell structure according to Claim 1, **characterized in that**, both the first lime slurry and the second lime slurry have a solid content of 10-20%.

3. The preparation method for nanoprecipitated calcium carbonate having a core-shell structure according to Claim 1 or 2, **characterized in that**, the mixed gas is a mixed gas of carbon dioxide and air.

## Patentansprüche

1. Ein Herstellungsverfahren für nanopräzipitiertes Calciumcarbonat mit einer Kern-Schale-Struktur, **dadurch gekennzeichnet, dass** es die folgenden Schritte umfasst:
(1) Herstellung von kernnanopräzipitiertem Calciumcarbonat
Rohmaterial für den Kern: Brennen von minderwertigem Kalkstein, um Branntkalk zu erhalten, Löschen des Branntkalks und Entfernen von Schlacke, um eine erste Kalkaufschlämmung zu erhalten, und Einstellen des Feststoffgehalts der ersten Kalkaufschlämmung, wobei der minderwertige Kalkstein 95,37 Gew.-% CaCO₃, 3,5845 Gew.- % MgCO₃, 0,0957 Gew.- % Fe₂O₃ und 0,0079 Gew.-% MnO₂ umfasst; und
Karbonisierung von kernnanopräzipitiertem Calciumcarbonat: Zuführen der ersten Kalkaufschlämmung in einen Karbonisierungsturm zur Karbonisierungsreaktion, um eine Suspension von kernnanopräzipitiertem Calciumcarbonat zu erhalten, wobei die Karbonisierung von kernnanopräzipitiertem Calciumcarbonat in Schritt (1) die folgenden Schritte umfasst: Zuführen der ersten Kalkaufschlämmung in einen Karbonisierungsturm, Starten des Rührens im Karbonisierungsturm, Einstellen der Anfangstemperatur der Karbonisierung auf 18-25 °C, Einleiten von Mischgas mit einer Kohlendioxidkonzentration von 20-50 Vol.-% bei einer Durchflussmenge von 50-100 l/min für die Karbonisierungsreaktion, Fortsetzen der Reaktion, bis die Systemleitfähigkeit 0,1-0,3 mS/cm erreicht hat, und Unterbrechung der Gaszufuhr zur Beendigung der Karbonisierungsreaktion, um die Suspension von kernnanopräzipitiertem Calciumcarbonat zu erhalten;
(2) Beschichtung einer Schale
Rohmaterial für die Schale: Brennen von hochwertigem Kalkstein, um Branntkalk zu erhalten, Löschen des Branntkalks und Entfernen von Schlacke, um eine zweite Kalkaufschlämmung zu erhalten, und Einstellen des Feststoffgehalts der zweiten Kalkaufschlämmung, wobei der hochwertige Kalkstein 99,46 Gew.-% CaCO₃, 0,4921 Gew.-% MgCO₃, 0,0062 Gew.- % Fe₂O₃ und 0,0033 Gew.-% MnO₂ umfasst;
Beschichtung der Schale: Mischen der in Schritt (1) hergestellten Suspension von kernnanopräzipitiertem Calciumcarbonat mit 10-30 Gew. % der zweiten Kalkaufschlämmung, und Herstellen einer Suspension von kernnanopräzipitiertem Calciumcarbonat mit einer Kern-Schale-Struktur durch Karbonisierung oder Alterung, wobei das Herstellen einer Suspension von kernnanopräzipitiertem Calciumcarbonat mit einer Kern-Schale-Struktur durch Karbonisierung die folgenden Schritte umfasst: Rühren der Suspension von kernnanopräzipitiertem Calciumcarbonat im Karbonisierungsturm bei einer Rührgeschwindigkeit von 800-1200 U/min und Einleiten von Mischgas mit einer Kohlendioxidkonzentration von 20-50 Vol.-% bei einer Durchflussmenge von 20-40 l/min; gleichzeitige langsame Zugabe von 10-30 Gew.-% der zweiten Kalkaufschlämmung in die Suspension von kernnanopräzipitiertem Calciumcarbonat, wobei die Leitfähigkeit des Systems während der Zugabe auf 1,0-2,0 mS/cm eingestellt wird und nach Beendigung der Zugabe die Einleitung des Gases gestoppt wird, um die Karbonisierungsreaktion zu beenden, wenn die Leitfähigkeit des Systems auf 0,1-0,3 mS/cm abfällt, wodurch die Suspension von kernnanopräzipitiertem Calciumcarbonat mit einer Kern-Schale-Struktur erhalten wird;
und wobei die Herstellung einer Suspension von kernnanopräzipitiertem Calciumcarbonat mit einer Kern-Schale-Struktur durch Alterung die folgenden Schritte umfasst: Zugabe von 10-30 Gew.-% der zweiten Kalkaufschlämmung in die Suspension von kernnanopräzipitiertem Calciumcarbonat, weitere Zugabe von Natriumcarbonat oder Natriumbicarbonat, gleichmäßiges Rühren, Altern des Systems bei einer Temperatur von 40-80 °C für 12-24 Stunden, um die Suspension von kernnanopräzipitiertem Calciumcarbonat mit einer Kern-Schale-Struktur zu erhalten, wobei das Molverhältnis der zweiten Kalkaufschlämmung zu dem Natriumcarbonat oder dem Natriumbicarbonat 1:1-5 ist; und
(3) Nachbehandlung: Oberflächenbehandlung, Dehydratisierung, Trocknung und Zerkleinerung der in Schritt (2) erhaltenen Suspension, um nanopräzipitiertes Calciumcarbonat mit Kern-Schale-Struktur zu erhalten.

2. Das Herstellungsverfahren von nanopräzipitiertem Calciumcarbonat mit Kern-Schale-Struktur nach Anspruch 1, **dadurch gekennzeichnet, dass** sowohl die erste Kalkaufschlämmung als auch die zweite Kalkaufschlämmung einen Feststoffgehalt von 10-20 % aufweisen.

3. Das Verfahren zur Herstellung von nanopräzipitiertem Calciumcarbonat mit einer Kern-Schale-Struktur nach Anspruch 1 oder 2, **dadurch gekennzeichnet, dass** das Mischgas ein Mischgas aus Kohlendioxid und Luft ist.

## Revendications

1. Procédé de préparation de carbonate de calcium nanoprécipité ayant une structure noyau-enveloppe, **caractérisé par** les étapes suivantes :
(1) préparation de carbonate de calcium nanoprécipité au noyau
matière première pour le noyau : calcination de calcaire de qualité inférieure pour obtenir de la chaux rapide, extinction de la chaux rapide et élimination du laitier pour obtenir une première bouillie de chaux, et ajustement de la teneur en solides de la première bouillie de chaux, dans lequel le calcaire de qualité inférieure comprend 95,37 % en poids de CaCO₃, 3,5845 % en poids de MgCO₃, 0,0957 % en poids de Fe₂O₃ et 0,0079 % en poids de MnO₂; et
carbonatation du carbonate de calcium nanoprécipité au noyau : alimentation de la première suspension de chaux dans une tour de carbonatation pour une réaction de carbonatation afin d'obtenir une suspension de carbonate de calcium nanoprécipité au noyau, dans laquelle la carbonatation du carbonate de calcium nanoprécipité au dans l'étape (1) comprend les étapes suivantes : alimentation de la première suspension de chaux dans une tour de carbonatation, démarrage de l'agitation dans la tour de carbonatation, régulation de la température initiale de carbonatation à 18-25 °C, introduction d'un gaz mélangé avec la concentration de dioxyde de carbone de 20-50 % en volume à un débit de 50-100 l/min pour une réaction de carbonatation, poursuite de la réaction jusqu'à ce que la conductivité du système atteigne 0,1-0,3 mS/cm, et arrêt de l'introduction du gaz pour terminer la réaction de carbonatation afin d'obtenir la suspension de carbonate de calcium nanoprécipité au noyau ;
(2) revêtement d'une enveloppe
matière première pour l'enveloppe : calcination de calcaire de haute qualité pour obtenir de la chaux vive, extinction de la chaux vive et élimination du laitier pour obtenir une seconde boue de chaux, et ajustement de la teneur en solides de la seconde boue de chaux, dans laquelle le calcaire de haute qualité comprend 99,46 % en poids de CaCO₃, 0,4921 % en poids de MgCO₃, 0,0062 % en poids de Fe₂O₃ et 0,0033 % en poids de MnO₂;
enrobage de l'enveloppe : mélange de la suspension de carbonate de calcium nanoprécipité au noyau préparée à l'étape (1) avec 10-30 % en poids de la seconde bouillie de chaux, et préparation d'une suspension de carbonate de calcium nanoprécipité ayant une structure noyau-enveloppe par carbonatation ou vieillissement, dans laquelle la préparation d'une suspension de carbonate de calcium nanoprécipité ayant une structure noyau-enveloppe par carbonatation comprend les étapes suivantes : agitation de la suspension de carbonate de calcium nanoprécipité au noyau dans la tour de carbonatation à une vitesse d'agitation de 800-1200 t/min, et introduction d'un gaz mélangé avec la concentration de dioxyde de carbone de 20-50 % en volume à un débit de 20-40 l/min ;
simultanément, addition lente de 10-30 % en poids de la seconde bouillie de chaux dans la suspension de carbonate de calcium nanoprécipité au noyau, en contrôlant la conductivité du système pour qu'elle soit de 1,0-2,0 mS/cm pendant l'addition, et après que l'addition est terminée, arrêt de l'introduction du gaz pour terminer la réaction de carbonatation lorsque le système de conductivité chute à 0,1-0,3 mS/cm, obtenant ainsi la suspension de carbonate de calcium nanoprécipité ayant une structure noyau-enveloppe ;
et dans laquelle la préparation d'une suspension de carbonate de calcium nanoprécipité ayant une structure noyau-enveloppe par vieillissement comprend les étapes suivantes : addition de 10 à 30 % en poids de la seconde bouillie de chaux dans la suspension de carbonate de calcium nanoprécipité au noyau, addition supplémentaire de carbonate de sodium ou de bicarbonate de sodium, agitation uniforme, vieillissement du système à une température de 40 à 80 °C pendant 12 à 24 heures pour obtenir la suspension de carbonate de calcium nanoprécipité ayant une structure noyau-enveloppe, dans laquelle le rapport molaire de la seconde bouillie de chaux au carbonate de sodium ou au bicarbonate de sodium est de 1:1 à 5 ; et
(3) post-traitement : soumettre la suspension obtenue à l'étape (2) à un traitement de surface, déshydratation, séchage et broyage pour obtenir du carbonate de calcium nanoprécipité ayant une structure noyau-enveloppe.

2. Procédé de préparation de carbonate de calcium nanoprécipité ayant une structure noyau-enveloppe selon la revendication 1, **caractérisé en ce que** la première bouillie de chaux et la seconde bouillie de chaux ont toutes deux une teneur en solides de 10 à 20 %.

3. Procédé de préparation de carbonate de calcium nanoprécipité ayant une structure noyau-enveloppe selon la revendication 1 ou 2, **caractérisé en ce que** le gaz mélangé est un gaz mélangé de dioxyde de carbone et d'air.
